# EUROPÄISCHE PATENTSCHRIFT

(11) **EP 2 071 991 B1**
(45) Veröffentlichungstag und Bekanntmachung des Hinweises auf die Patenterteilung: **27.10.2010**
(21) Anmeldenummer: 08169833.4
(22) Anmeldetag: 25.11.2008
(51) Int. Cl.: A47J 47/00, B24B 3/36

(54) **Schneidbrett**
Cutting board
Planche de découpage

(30) Priorität: 20.12.2007 AT 20802007
(43) Veröffentlichungstag der Anmeldung: 24.06.2009
(73) Patentinhaber: Raschkov, Oleg, 5020 Salzburg (AT)
(72) Erfinder: Raschkov, Oleg, 5020 Salzburg (AT)
(74) Vertreter: Babeluk, Michael

(56) Entgegenhaltungen:
- JP-A- 2005 334 577
- JP-A- 2006 159 395
- US-A- 5 233 793
- US-A1- 2004 229 554

## Beschreibung

Die Erfindung betrifft ein mehrteiliges Schneidbrett mit einer Schärfeinrichtung für Schneidwerkzeuge, insbesondere Küchenmesser.

Bei der Zubereitung von Speisen, wie beispielsweise dem Schneiden von Fleisch, Fisch oder Gemüse, stumpft ein Messer unter Umständen sehr rasch ab und muss geschliffen und geschärft werden. Für das Schärfen von Messern und Scheren stehen zahlreiche Vorrichtungen zur Verfügung, wie beispielsweise Schleifsteine, Schleifstahl oder auch elektrische Schleifgeräte mit rotierenden Schleifsteinen.

Nachteilig an diesen Geräten ist allerdings, dass diese oft nicht gleich zur Hand sind und oft auch einigen Platz beispielsweise in der Küche benötigen. Es ist daher vorteilhaft, eine Schärfeinrichtung direkt in das Schneidbrett zu integrieren, um eine Möglichkeiten zum Schärfen der Messer direkt zur Hand zu haben, wenn eine Schärfeinrichtung benötigt wird.

Die gattungsgebende JP 2006-159395 zeigt ein Schneidbrett mit einem Schleifstein oder Schleifpapier, das an der Schneidbrettoberfläche angeordnet ist.

In der JP 2005-334577 wird ein Schneidbrett mit einem Messerschärfer beschrieben, der im einem Eckbereich des Schneidbrettes in einer grabenförmigen Ausnehmung, die parallel zu einer Kante des Schneidbrettes und nicht über die gesamte Länge des Schneidbrettes verläuft, angeordnet ist.

Nachteilig an diesem Stand der Technik ist, dass der beim Schärfen des Küchenmessers entstehende Schleifstaub sich auf dem Schneidbrett bzw. in der Ausnehmung sammelt, und diese nur schwer zu reinigen ist, was zu Problemen mit den Hygienebestimmungen beispielsweise in Restaurants oder Gasthäusern führen kann. Des Weiteren erlaubt sie das Schärfen des Messers in nur eine Richtung sowie unter einen nicht vorteilhaften Winkel, weil die Ausnehmung, in der der Messerschärfer angeordnet ist, im Bereich der Messerspitze abgeschlossen ist.

Es ist daher Aufgabe der Erfindung ein Schneidbrett mit einer verbesserten Schärfeinrichtung bereitzustellen, das die obengenannten Nachteile des Standes der Technik beseitigt.

Diese Aufgabe wird gemäß Anspruch 1 gelöst.

Damit verunreinigt der Schleifstaub die auf dem Schneidbrett befindlichen Lebensmittel nicht, sondern fällt durch den Spalt auf die Arbeitsplatte, auf der das Schneidbrett abgelegt ist, und kann einfach weggewischt werden. Ebenso erlaubt diese Anordnung der Schärfeinrichtung ein Schleifen des Messers von allen Richtungen und unter unterschiedlichen Winkeln, unabhängig davon, ob der Benutzer ein Links- oder Rechtshänder ist.

Bevorzugterweise verfügt die Schärfeinrichtung über zumindest zwei Schärfmesser, die in einem Winkel zueinander angeordnet in einer Halterung mit einer Aussparung zum Hindurchführen eines zu schärfenden Gegenstands untergebracht sind. Diese Schärfmesser sind aus einem harten, aber leicht brechendem Material. Damit beispielsweise beim Anheben des Schneidbrettes das Gewicht des zweiten Teils nicht auf den Schärfmessern ruht und damit zu deren möglichen Bruch führt, sind diese in einer Halterung untergebracht, auf die die Belastung übertragen wird. Die Aussparung in der Halterung ist so dimensioniert, dass das Hindurchführen beispielsweise eines Messers ohne Einschränkung von Richtung oder Winkel erfolgt, so dass ein optimales Schleifen möglich ist.

Diese Halterung ist in einer bevorzugten Ausführung der Erfindung zumindest zweiteilig ausgeführt, wobei jeder Teil eine Ausnehmung für die Aufnahme jeweils eines Schärfmessers aufweist. Müssen die Schärfmesser ausgetauscht werden, weil sie beispielsweise abgenützt sind, so wird die Halterung zerlegt, die Schärfmesser aus der Ausnehmung in der Halterung entnommen und ausgewechselt. Die Ausnehmung in jedem Teil der Halterung bewirkt des Weiteren, dass die Schärfmesser immer im optimalen Winkel zueinander in der Halterung ausgerichtet sind.

Die Halterung der Schärfeinrichtung ist, wie bereits erwähnt, zwischen den beiden Teilen des Schneidbrettes angeordnet, wobei jeder Teil des Schneidbretts eine Ausnehmung für die Aufnahme der Halterung der Schärfeinrichtung aufweist. Beim Tausch der Schärfmesser werden die beiden Teile getrennt und die Halterung aus der Ausnehmung herausgenommen. Dies ermöglicht einen raschen und einfachen Wechsel der Schärfeinrichtung. So kann beispielsweise vorgesehen sein, dass unterschiedliche Schleifmesser in einer eigenen Halterung für unterschiedliche Messer vorhanden sind, sodass lediglich die Halterungen ausgetauscht werden müssen, um ein Schärfen des jeweiligen Messers am Schneidbrett zu ermöglichen.

Besonders bevorzugt weist das Schneidbrett eine vieleckige, insbesondere vier-oder fünfeckige Form auf, wobei ein Ecksegment von dem Schneidbrett abgetrennt und über die Schärfeinrichtung mit diesem verbunden ist. Durch die Anordnung der Schärfeinrichtung in einem Eckbereich des Schneidbrettes, wobei der Spalt nicht parallel, sondern unter einem Winkel zu den benachbarten Kanten des Schneidbrettes verläuft, ist die Schärfeinrichtung im Wesentlichen von allen Seiten zugänglich und damit äußerst flexibel in der Handhabung.

Alternativ dazu ist in einer anderen Ausführung der Erfindung das Schneidbrett kreisförmig oder elliptisch ausgeführt, wobei ein Kreis- oder Ellipsensegment von dem Schneidbrett abgetrennt und über die Schärfeinrichtung mit diesem verbunden ist.

Im Folgenden wird anhand von nicht-einschränkenden Ausführungsbeispielen mit zugehörigen Figuren die Erfindung näher erläutert. Darin zeigen:
- Fig. 1A und Fig. 1B: zwei Ausführungen des erfindungsgemäßen Schneid- brettes;
- Fig. 2: die Schärfeinrichtung aus den Fig. 1A und Fig. 1B in einer Ansicht entlang der Linie A - A;
- Fig. 3: die Schärfeinrichtung in einer Explosionsdarstellung;
- Fig. 4: die Schärfeinrichtung im zusammengesetzten Zustand;
- Fig. 5: die Benutzung der Schärfeinrichtung beim Schleifen eines Messers; und
- Fig. 6: die Schärfeinrichtung im eingebauten Zustand.

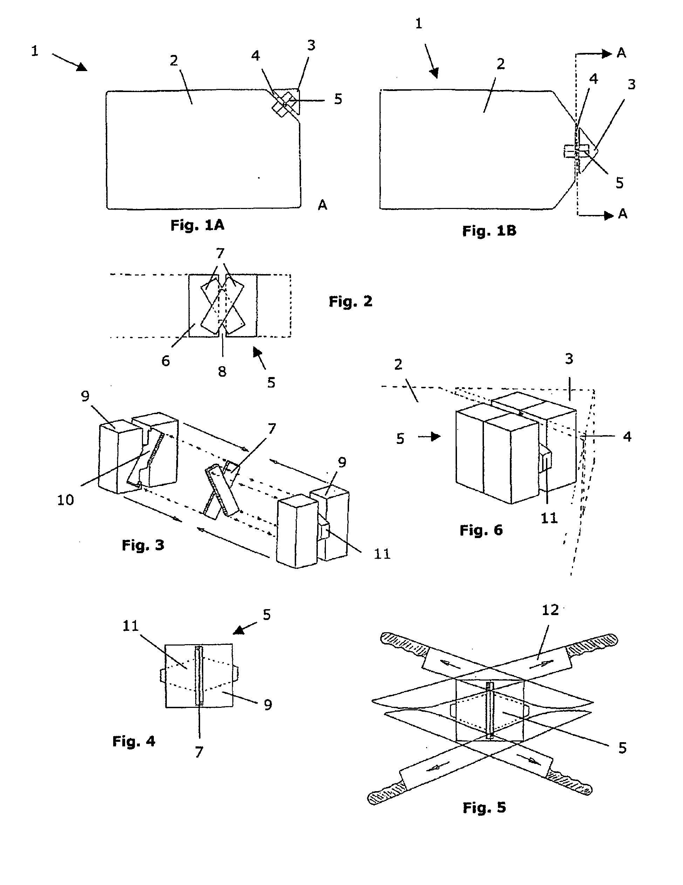

Die in den Fig. 1A und Fig. 1B dargestellten Schneidbretter 1, bevorzugterweise aus Kunststoff, sind zweiteilig ausgeführt mit einem ersten Teil 2, auf dem beispielsweise Lebensmittel geschnitten werden, und einem zweiten Teil 3, der als dreieckiges Ecksegment ausgeführt und über einen Spalt 4 von dem ersten Teil 2 beabstandet ist. Das Ecksegment 3 ist über die Schärfeinrichtung 5 mit dem ersten Teil 2, dem eigentlichen Schneidbrett verbunden.

In Fig. 2 ist die Schärfeinrichtung 5 in einer Ansicht entlang der Linie A - A, also entlang des Spaltes 4, gezeigt. Zwei Schärfmesser 7 sind in einer Halterung 6 untergebracht, wobei die beiden Schärfmesser 7um eine gemeinsame Achse, die im Wesentlichen durch den Mittelpunkt der beiden Schärfmesser 7 verläuft, zueinander um einen für das Schleifen optimalen Winkel verdreht angeordnet sind. Die Halterung 6, die beispielsweise aus Kunststoff oder aber aus einem anderen Material gefertigt ist, weist eine Aussparung 8 auf, durch die ein zu schleifendes Messer hindurchgeführt wird, so dass die Schneide des Messers an den Kanten der Schärfmesser 7 geschärft wird.

Die Schärfeinrichtung 5 besteht gemäß der Fig. 3 aus zwei Halterungsteilen 9, zwischen die die Schärfmesser 7 angeordnet sind, wie auch aus der Fig. 4, die eine Seitenansicht der zusammengesetzten Schärfeinrichtung 5 zeigt, ersichtlich ist.

Jeder Halterungsteil 9 weist eine Ausnehmung 10 auf, in die ein Schärfmesser 7 einsetzbar ist, wodurch die Schärfmesser 7 in der Halterung 6 ortsfest positioniert werden. Des Weiteren erleichtert diese Ausnehmung 10 den Austausch der Schärfmesser 7. Zusätzlich ist in jedem Halterungsteil 9 ein im Wesentlichen keilförmiges Führungselement 11 vorgesehen, entlang dessen das zu schleifende Messer 12 geführt ist, wie auch der Fig. 5 zu entnehmen ist.

In der Fig. 6 ist schließlich nochmals die Einbaulage der Schärfeinrichtung 5 in dem Schneidbrett 1 in einer perspektivischen Ansicht dargestellt. Die Führungselemente 11 sind hierbei in dem Spalt 4 zwischen erstem und zweitem Teil 2, 3 des Schneidbrettes 1 angeordnet, während die Schleifkanten der Schleifmesser 7 normal dazu angeordnet sind.

Es versteht sich, dass die beschriebenen Ausführungsbeispiels in nicht einschränkender Weise zu sehen sind. So können beispielsweise an einem Schneidbrett mehrere Schärfeinrichtungen vorgesehen sein. Auch beschränkt sich die vorliegende Erfindung nicht auf die dargestellte Ausführung der Schärfeinrichtung. Wesentlich an der Erfindung ist, dass die Schärfeinrichtung derart in einem Schneidbrett angeordnet ist, dass sie von allen möglichen Seiten ohne Einschränkung für das zu schleifende Schneidwerkzeug zugänglich ist, wobei es zu keiner Verunreinigung der Schneidbrettoberfläche und damit der darauf befindlichen Lebensmittel kommt.

## Patentansprüche

1. Mehrteiliges Schneidbrett (1) mit zumindest einer Schärfeinrichtung (5) für Schneidwerkzeuge, insbesondere Küchenmesser (12), **dadurch gekennzeichnet, dass** zumindest ein erster Teil (2) des Schneidbretts (1) über die Schärfeinrichtung (5) mit zumindest einem zweiten Teil (3) des Schneidbrettes (1) verbunden ist, wobei zwischen erstem und zweitem Teil sich ein Spalt befindet, in dem die Schärfeinrichtung angeordnet ist, die **dadurch** die beiden Teile mit einander verbindet.

2. Schneidbrett (1) nach Anspruch 1, **dadurch gekennzeichnet, dass** die Schärfeinrichtung (5) über zumindest zwei Schärfmesser (7) verfügt, die in einem Winkel zueinander angeordnet in einer Halterung (6) mit einer Aussparung (8) zum Hindurchführen eines zu schärfenden Gegenstands untergebracht sind.

3. Schneidbrett (1) nach Anspruch 2, **dadurch gekennzeichnet, dass** die Halterung (6) zumindest zweiteilig ausgeführt ist, wobei jeder Halterungsteil (9) eine Ausnehmung (10) für die Aufnahme jeweils eines Schärfmessers (7) aufweist.

4. Schneidbrett (1) nach einem der Ansprüche 2 oder 3, **dadurch gekennzeichnet, dass** jeder Teil (2, 3) des Schneidbretts (1) eine Ausnehmung für die Aufnahme der Halterung (6) der Schärfeinrichtung (5) aufweist.

5. Schneidbrett (1) nach einem der Ansprüche 1 bis 4, **dadurch gekennzeichnet, dass** es eine vieleckige, insbesondere vier- oder fünfeckige Form aufweist, wobei ein im Wesentlichen dreieckiges Ecksegment (3) von dem Schneidbrett (1) abgetrennt und über die Schärfeinrichtung (5) mit diesem verbunden ist.

6. Schneidbrett (1) nach einem der Ansprüche 1 bis 4, **dadurch gekennzeichnet, dass** es eine kreisrunde oder elliptische Form aufweist, wobei ein Kreis- oder Ellipsensegment von dem Schneidbrett (1) abgetrennt und über die Schärfeinrichtung (5) mit diesem verbunden ist.

## Claims

1. A multipart cutting board (1), comprising at least one whetting device (5) for cutting tools, especially kitchen knives (12), **characterised in that** at least a first part (2) of the cutting board (1) is connected through the whetting device (5) with at least a second part (3) of the cutting board (1), with a gap being disposed between the first and second part in which the whetting device is arranged, which thus joins the two parts with one another.

2. A cutting board (1) according to claim 1, **characterised in that** the whetting device (5) comprises at least two whetting knives (7) which, arranged at an angle with respect to each other, are housed in a support (6) with a recess (8) for guiding through an object to be whetted.

3. A cutting board (1) according to claim 2, **characterised in that** the support (6) is arranged at least in two parts, with each part (9) of the support having a recess (10) for receiving a whetting knife (7) each.

4. A cutting board (1) according to one of the claims 2 or 3, **characterised in that** each part (2, 3) of the cutting board (1) has a recess for receiving the support (6) of the whetting device (5).

5. A cutting board (1) according to one of the claims 1 to 4, **characterised in that** it has a polygonal shape, especially quadrangular or pentagonal, with a substantially triangular corner segment (3) being separated from the cutting board (1) and being connected with the same through the whetting device (5).

6. A cutting board (1) according to one of the claims 1 to 4, **characterised in that** it has a circular or elliptical shape, with a circular or elliptical segment being separated from the cutting board (1) and being connected with the same through the whetting device (5).

## Revendications

1. Planche à découper (1) en plusieurs parties avec au moins un dispositif d'affûtage (5) pour des outils tranchants, en particulier des couteaux de cuisine (12),
**caractérisée en ce qu'**
au moins une première partie (2) de la planche à découper (1) est reliée avec au moins une seconde partie (3) de la planche à découper (1) par le dispositif d'affûtage (5), dans laquelle,
la première et la seconde partie sont séparées par une fente recevant le dispositif d'affûtage (5) qui relie les deux parties entre elles.

2. Planche à découper (1) selon la revendication 1,
**caractérisée en ce que**
le dispositif d'affûtage (5) se compose d'au moins deux couteaux d'affûtage (7) qui sont disposés avec un angle entre eux dans un dispositif de fixation (6) avec un évidement (8) pour le passage d'un objet à affûter.

3. Planche à découper (1) selon la revendication 2,
**caractérisée en ce que**
le dispositif de fixation (6) est réalisé au moins en deux parties chaque partie de fixation (9) présentant un évidement (10) pour recevoir à chaque fois un couteau d'affûtage (7).

4. Planche à découper (1) selon la revendication 2 ou 3,
**caractérisée en ce que**
chaque partie (2, 3) de la planche à découper (1) présente un évidement pour recevoir le dispositif de fixation (6) du dispositif d'affûtage (5).

5. Planche à découper (1) selon l'un des revendications 1 à 4, **caractérisée en ce qu'**
elle présente la forme d'un polygone en particulier un quadrilatère ou un pentagone dans lequel un segment de coin (3) essentiellement triangulaire a été séparé de la planche à découper (1) pour y être relié par le dispositif d'affûtage (5).

6. Planche à découper (1) selon l'une des revendications 1 à 4, **caractérisée en ce qu'**
elle présente une forme circulaire ou elliptique dont un segment circulaire ou elliptique a été séparé de la planche à découper (1) et pour être relié à celle-ci par le dispositif d'affûtage (5).
